# EUROPEAN PATENT SPECIFICATION

(11) **EP 1 704 737 B1**
(45) Date of publication and mention of the grant of the patent: **26.02.2020**
(21) Application number: 04800296.8
(22) Date of filing: 12.11.2004
(51) Int. Cl.: H04W 8/20, H04W 4/14, H04W 60/00, H04W 8/18

(54) **METHOD AND NETWORK FOR DETECTION OF DEVICE INFORMATION OF MOBILE STATIONS**
VERFAHREN UND NETZWERK ZUR ERFASSUNG VON GERÄTENINFORMATIONEN VON MOBILSTATIONEN
PROCÉDÉ ET RÉSEAU PERMETTANT DE DÉTECTER DES INFORMATIONS DE DISPOSITIF DE STATIONS MOBILES

(30) Priority: 27.11.2003 SE 0303210
(43) Date of publication of application: 27.09.2006
(73) Proprietor: Giesecke+Devrient Mobile Security GmbH, 81677 München (DE)
(72) Inventor: WENNBERG, Martin, S-167 56 Bromma (SE); SVENSSON, Britt-Mari, S-192 74 Sollentuna (SE); THORSTENSSON, Tommy, S-167 38 Bromma (SE)
(86) International application number: PCT/SE2004/001633
(87) International publication number: WO 2005/053348

(56) References cited:
- EP-A1- 1 331 833
- WO-A1-03/096723
- US-A- 6 148 192
- US-A1- 2003 027 581

## Description

### TECHNICAL FIELD

The invention is concerned with a method and a mobile telecommunication network for detection of device information of mobile stations used.

### BACKGROUND ART

GSM, together with other technologies, is part of an evolution of wireless mobile telecommunication that includes e.g. General Packet Radio System (GPRS), and Universal Mobile Telecommunications Service (UMTS).

The Global System for Mobile Communication (GSM) is a standard for digital wireless communications with different services, such as voice telephony. The Subscriber Identity Module (SIM) inside GSM phones was originally designed as a secure way to connect individual subscribers to the network but is nowadays becoming a standardized and secure application platform for GSM and next generation networks.

UMTS is the next (3^{rd}) generation mobile communication system, which provides an enhanced range of multimedia services, such as video. UMTS has specified the use of the USIM (universal SIM) as the evolution of SIM. In GSM and UMTS networks, the (U)SIM card is central both for subscriber identification and for providing value added services to users. Usually referred to as a SIM card, the USIM (Universal Subscriber Identity Module) is the user subscription to the UMTS mobile network. The USIM contains relevant information that enables access onto the subscribed operator's network.

The functional architecture of a GSM system can be broadly divided into the Mobile Station, the Base Station Subsystem, and the Network Subsystem. The subscriber carries the mobile station, the base station subsystem controls the radio link with the mobile station and the network subsystem performs the switching of calls between the mobile users and other mobile and fixed network users.

The Mobile Station (MS) is the equipment the GSM user sees from the whole system. It actually consists of two distinct entities. The actual hardware is the Mobile Equipment (ME), also refered to as the "terminal" or the "handset", which consists of the physical equipment, such as the radio transceiver, display and digital signal processors. The subscriber information is stored in the Subscriber Identity Module (SIM), implemented as a Smart Card.

The SIM card is a smart card that saves subscriber information about identity, subscription, subscriber environment, radio environment and other information. The information in the SIM is stored in a logical structure of files.

The mobile equipment is uniquely identified by the International Mobile Equipment Identity (IMEI) being a unique code that corresponds to a specific GSM handset. The SIM card, in turn, is identified by the Integrated Circuit Card Identity (ICCID) determining the serial number of the card, and contains the International Mobile Subscriber Identity (IMSI), identifying the subscriber, a secret key for authentication, and other user information.

The term "device information" comprises in this text both equipment information, such as the IMEI, and SIM information, such as the ICCID or the subscriber identity, i.e. IMSI. The IMEI and the IMSI are, however, independent and can thereby provide personal mobility.

The central component of the network subsystem is the mobile services switching center (MSC). This acts like a normal switching node of the PSTN (Public Switched Telephone Network) or ISDN (Integrated Services Digital Network) and connects the mobile signal to these fixed networks. It additionally provides all the functionality needed to handle a mobile subscriber. The Mobile Station Integrated Service Digital Network Number, MSISDN, is the standard international telephone number used to identify a given subscriber.

The Short Message Service Center (SMSC) enables subscribers to send and receive messages in the Cellular network. It can be interfaced with Mobile Switching centers (MSCs) over an SS7 link. The entities, which may receive or send short messages may be located in a fixed network, a mobile station, or another service center. The Short Message Service Center (SMSC) is responsible for the relaying, storing and forwarding of a short message between such an entity and a mobile station.

The operator declares the subscription in a database inside the network, which holds the correspondence between the IMSI and the MSISDN. By inserting the SIM card into another GSM terminal, the user is able to receive and make calls from that terminal, and receive other subscribed services.

When a new (U)SIM is issued, a lot of information, both personal and to some extent operator defined, is lost, unless this information is copied from the old (U)SIM to the new (U)SIM. This could for example be the phone book.

Introducing a new terminal has other problems - since it is not personalized as (U)SIM cards are. Hence it is required to be configured with network settings to be enabled to use the different services the Mobile Service Provider offers. Apart from that, the same problem with personal information and services, as with the (U)SIM Cards, applies.

Today it is not possible to know what handset model a user is using, if not explicitly notified by the user. This is especially a problem when trying to keep a repository up to date with active handsets, potentially to be used for updating the handset with appropriate data.

US 6,148,192 A1 relates to a method for checking the access right of a subscriber equipment.

EP 1 331 833 A1 relates to a method for storing a pair of a MSISDN and a IMEI in a network. Whenever a change of the corresponding pair is detected, a database is informed.

WO 03/096723 A1 relates to a method in a system for replacing smart cards. Depending on the change of an ICCID, a user account will be assigned to a difference device by a management center.

### OBJECT OF THE INVENTION

The object of the invention is to develop a solution for better management of subscriber and equipment information, especially in situations wherein subscriber information changes.

### SUMMARY OF THE INVENTION

The invention is as defined in the appended claims. The method of the invention is performed in a mobile telecommunication network for detection of device information including subscriber information and equipment information. The network comprises a mobile station with a terminal part and with a module for subscriber information and an application, and a repository for storing device information. In the method, the application in the mobile station detects device information of a mobile station attaching to the network, compares the detected device information to the device information previously stored in the mobile station, and sends the detected device information to be stored in the network repository if it does not correspond to the information previously stored.

The mobile telecommunication network of the invention further comprises a detector for handling device information. The mobile station of the invention included in this network has an application and detects device information.

The preferable embodiments of the invention have the characteristics of the subclaims.

The invention thus provides terminal based methods for detecting what devices (mobile station, i.e. handset and/or SIM) a mobile user is using, and means for provisioning them with relevant information.

The invention is especially topical in a situation, wherein the subscriber either has changed his mobile terminal (by inserting the old SIM in the new terminal) or changed the SIM card (by removing the old SIM card from the terminal and inserted a new one). In this text, the term "Terminal Switch" is used for the former case and the term "SIM switch" for the latter case.

The method of the invention is primarily implemented in the GSM or UMTS network, whereby the subscriber information, such as information about identity, subscription, subscriber environment, radio environment, etc. described by the IMSI, is stored in The Subscriber Identity Module (SIM) inside GSM phones and the Universal SIM (USIM) when implemented in the UMTS network.

The solution of the invention has two major steps, i.e. the detection of a new device (SIM or terminal) being used by a user and updating the new device with relevant data. This solution is based on an application executing on a Smart Card, such as the SIM card. The detection of the new device is sent to a central system (Device Switch Detector, which either can be a Terminal Switch Detector TSD or a SIM Switch Detector (SSD) to act on this information. The solution could for example be implemented as a combination of Wireless Internet Browser applications (WIBlet(s)) and a plug-in, for WIB enabled cards or as a Java Card Applet for Java Cards or as a SIM application toolkit.

The detection of the device information is performed by sending this information from the mobile subscriber terminal to an application in the mobile station, as a consequence of which the application performs said detection.

The detection of a new terminal (Terminal Switch) is based on the terminal identity (IMEI). being stored on the SIM Card. When the SIM Card is initialized the IMEI from the previous initialization is compared with the current IMEI, requested by the application from the handset. If they differ - it is an indication of that a terminal switch has taken place and this information is sent to the TSD server for further processing.

The detection of a new SIM card (SIM Switch) could be detected by using the same mechanism as above (comparing IMEI), or a dedicated mechanism (comparing a dedicated SIM Switch parameter). When the SIM card is initialized, the application reads the IMEI (or the dedicated SIM Switch parameter) from its stored position, which is on the SIM card. If it is found to be 0 (or not defined), it indicates that the SIM is being used for the first time. The unique SIM identity (e.g. ICCID) is sent to the SIM Switch Detector to evaluate the given information and make the decision whether it was a SIM Switch or not. The decision is based on comparing the given SIM identity read from the SIM card with the information previously stored in the SIM repository in the network.

The advantages of the invention are that automatic provisioning is possible on terminal switch, which solves the problems faced in the background art section. The solution to all the non-configured handsets is to automatically provision them with accurate configuration data when a handset is being used for the first time.

Moreover, personal settings from an old handset can be restored. When a user has started to use a new handset it could be updated with personal information, in addition to the network configuration data. Personal information that was on the old handset, and stored in the network, could be downloaded to the handset, upon user acknowledgement. Personal information could for example be WAP bookmarks, Java applets, logos, ringtones etc.

A detection of a handset switch will lead to that the system downloads the personal settings used in the old handset, previously stored in the system. Applications could also be downloaded and the system could even download the same applications potentially upgraded to suit the capabilities of the new handset, e.g. a game designed for a small screen used on the old handset could be replaced with the same game designed for a larger color screen - according to the capability of the: new handset.

When a new SIM has been introduced it could be updated with information from an image of the old SIM card. Operator defined data, if not pre-personalized, could automatically be downloaded. Personal data if stored/backed-up in the operator's domain, e.g. the Phonebook, could be downloaded, preferably after a question been sent to the user (by e.g. Text SM, WIG push, or WAP push) and acknowledged by the same (via e.g. Text SM, WIG message, or WAP message).

In the following, the invention will be described by means of some embodiments of the invention by referring to figures. The invention is not restricted to the details of the description.

### FIGURES

Figure 1 shows an environmental view of a network of the invention, wherein an embodiment of the method of the invention can be implemented.
Figure 2 presents a flow scheme of an embodiment of the method of the invention implemented in the network of figure 1
Figure 3 presents a flow scheme of an other embodiment of the method of the invention implemented in the network of figure 1

### DETAILED DESCRIPTION

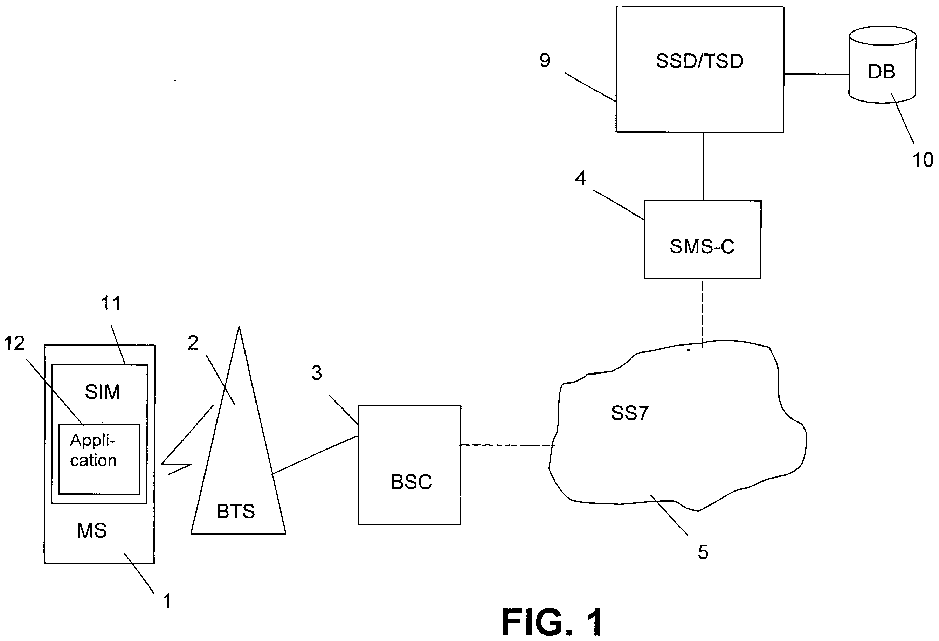

Figure 1 is an architectural view of the network structure, in which the method of the invention can be implemented. In figure 1, it is assumed that the invention is implemented in the GSM network.

The GSM network has different parts. The Mobile Station (MS) with reference number 1 is carried by the subscriber. The Base Station Subsystem (BSS) controls the radio link with the Mobile Station. A cell is formed by the coverage area of a Base Transceiver Station (BTS) having reference number 2 in figure 1, which serves the MS 1 in its coverage area. Several BTS stations together are controlled by one Base Station Controller (BSC) having reference number 3 in the figure. The BTS 2 and BSC 3 together form the Base Station Subsystem (BSS). The Mobile Station and the Base Station Subsystem communicate across the air interface through a radio link.

The Network Subsystem, the main part of which is the Mobile services Switching Center (MSC) (not shown) performs the switching of calls between the mobile and other fixed or mobile network users, as well as management of mobile services, such as authentication. The Operations and Maintenance center (not shown) oversees the proper operation and setup of the network.

The communication from BSC 3 further is based on signaling system no. 7 (SS7) protocol, which is indicated with reference number 5 in the figure and constitutes the wireless network signaling infrastructure in GSM. SS7 is a global standard for telecommunications defined by the International Telecommunication Union (ITU) Telecommunication Standardization Sector (ITU-T). The SS7 standard defines the procedures and protocol by which the network elements exchange information over a digital signaling network to effect secure worldwide telecommunications.

The Short Message Service Center (SMSC) with reference number 4 in figure 1 enables subscribers to send and receive messages and is interfaced with the Mobile Switching centers (MSCs) over an SS7 link.

All the above functions are parts of the GSM standard. When implemented in GSM, the invention introduces some further functions in the network.

Inventive functions in figure 1 is a Device Switch Detector 9 that can be a Terminal Switch Detector (TSD) or a SIM Switch Detector (SSD) depending on which embodiment of the invention it is question about. When the Device Switch Detector 9 is a TSD, a repository 10 that contains lists of pairs of IMEI/IMSI, IMEI/MSISDN or IMEI/IMSI/MSISDN values is connected to it. When the Device Switch Detector 9 is an SSD, a repository 10 that contains lists of pairs of IMSI/MSISDN/ICCID values is connected to it.

A further inventive function in figure 1 is an application 12 on the SIM card executed by a signal from the SIM operating system that the terminal has been switched on.

In a first embodiment, the application program is a Terminal Switch Application, which asks the telephone of the IMEI and reads the IMEI from a memory space on SIM. All data on the SIM are stored in files and one of those is available for the application. Thereafter, the application 12 evaluates whether there is a new terminal, i.e. if the read IMEI and the previously stored IMEI differ from eachother. If so, this information is sent to a Terminal Switch Detector (TSD) 9, which interprets the signal by means of a repository 10 containing lists of pairs of IMEI/IMSI values or IMEI/MSISDN values and connected to the TSD 9.

When TSD gets the information that a subscriber has changed telephone (the IMEI/IMSI or IMEI/MSISDN pair updated with a new IMEI), TSD then updates the repository information and also the IMEI information in the SIM file by e.g. sending a SMS message to SIM and preferably sending a signal to those components, that are interested in knowing that a subscriber has changed telephone (a terminal switch has taken place). This change is interesting because it is now known that an unconfigured telephone exists and that suitable things can be sent to the telephone to have it work with Global Packet Radio Services (GPRS), Wireless Application Protocol (WAP), e-mail etc.

In another embodiment of the invention, the application program is a SIM Switch Application, which reads an indicator from a memory space on the SIM in order to evaluate whether there is a new SIM. If so, this information is sent to a SIM Switch Detector (SSD) 9, which interprets the signal by means of the repository 10. In this embodiment, the repository contains lists of MSISDN/IMSI/ICCID values and is connected to the SSD 9. When SSD gets the information that a subscriber has changed SIM, it updates the information in the MSISDN/IMSI/ICCID repository and sends back an acknowledgement to the SIM Switch Application to store a value for the SIM Switch indicator that a SIM Switch has taken place.

The TSD or SSD is connected to the SMSC 4 in figure 1, which enables it to send and receive information about IMEI/MSISDN/IMSI/ICCID values in form of SMS messages to and from the SIM 11.

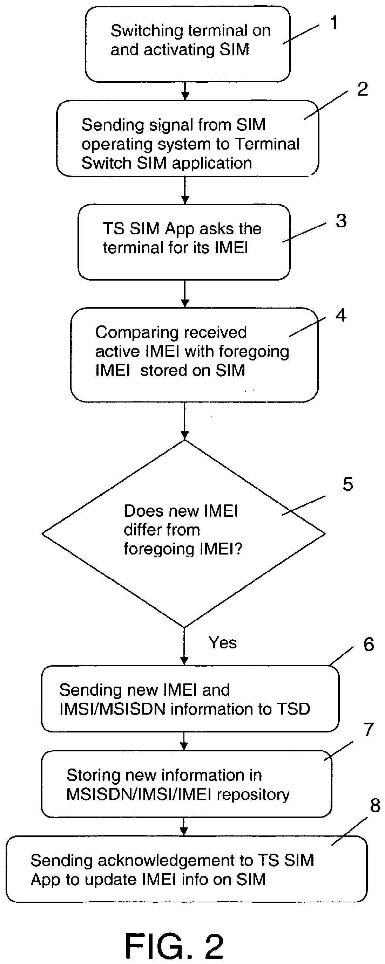

Figure 2 presents a flow scheme of an embodiment of the method of the invention used when a mobile station attaches to the network, here a network according to figure 1. It is assumed that the user of the mobile terminal has changed his mobile terminal but kept his old SIM card by transferring it to the new terminal.

When the terminal is switched on (step 1 of figure 2), a signal is sent (in step 2 of figure 2) from the SIM operating system to the Terminal Switch SIM application in order to start said application.

The application starts with asking, in step 3 of figure 2, the terminal for its International Mobile Equipment Identity (IMEI), i.e. the unique code that corresponds to a specific GSM terminal.

When the terminal has given the requested IMEI information to the application, the Terminal Switch SIM application compares in step 4 of figure 2 the given IMEI information with the IMEI value read from the SIM file showing what terminal the SIM was in the last time it was restarted. If it in step 5 of figure 2 is found that the new IMEI differs from the previously stored IMEI, a terminal switch is considered to have happened.

Information about the subscriber, either the International Mobile Subscriber Identity (IMSI) or the standard International telephone number used to identify a given subscriber (MSISDN) or both as well as the new IMEI is thereafter sent in step 6 of figure 2 to the Terminal Switch Detector (TSD) with an SMS message. The TSD then stores the new information in the IMSI/IMEI, IMSI/MSISDN/IMEI or MSISDN/IMEI repository in step 7 of figure 2 and sends acknowledgement to the Terminal Switch SIM application to update IMEI information on SIM in step 8 of figure 2.

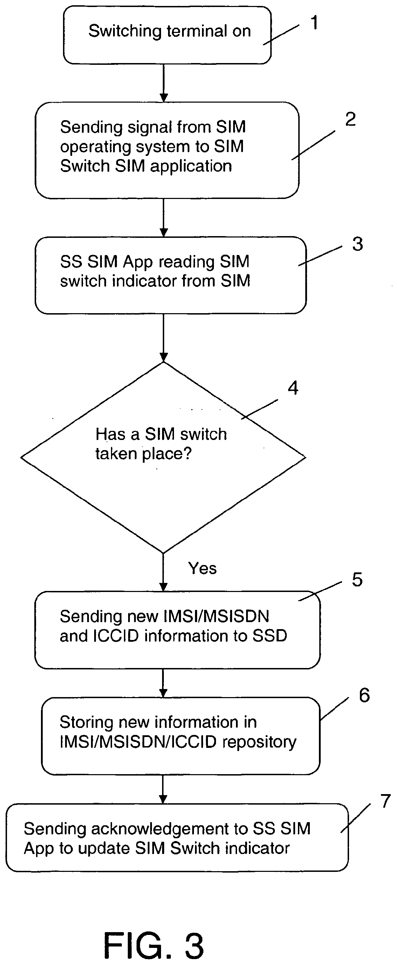

Figure 3 presents a flow scheme of an other embodiment of the method of the invention used when a mobile terminal attaches to a network according to figure 1. Now it is assumed that the user of the mobile terminal has changed his SIM card by removing the old SIM card and inserting a new one into the terminal (old or new).

When the terminal is switched on (step 1 of figure 3), a signal is sent (in step 2 of figure 3) from the SIM operating system to the SIM Switch SIM application in order to start said application.

The application starts with step 3 of figure 3, wherein the SIM Switch Application reads the value of a SIM Switch Indicator. This indicator is a variable on the SIM card being e.g. "0" or undefined until a SIM Switch is reported, and e.g. "1" after a SIM Switch has been reported.

If the SIM Switch Application notes in step 4 of figure 3 on the basis of the SIM Switch indicator that a SIM Switch has taken place, it sends new IMSI/MSISDN and ICCID information to the SIM Switch Detector (SSD) in step 5 of figure 3. In step 6 of figure 3, the new information is stored in the IMSI/MSISDN/ICCID repository, whereafter an acknowledgement is sent in step 7 of figure 3 to the SIM Switch Application to update the SIM Switch indicator to e.g. "1".

When the user again changes to a new SIM card, the SIM Switch indicator on the new SIM card has the value "0", which is read by the SIM Switch application when the terminal is switched on. The SIM Switch Application then again performs steps 4 - 5 and stores the new indicator value "1" when an aknowledgement has come from the SSD that the new information has been stored in the IMSI/MSISDN/ICCID repository.

## Claims

1. Method in a mobile telecommunication network for detection of device information including subscriber information and equipment information, the network comprising a mobile station (1) with a terminal part and with a subscriber identity module (11), SIM, and an application (12), the network further comprising a repository (10) for storing device information, including configuration data and/or personal settings data, the method comprising
a) detecting by the application (12) device information of the mobile station (1) attaching to the network,
b) comparing by the application (12) the detected device information to the device information previously stored in the mobile station (1),
c) the application (12) running in the mobile station (1) sends the detected device information to be stored in the network repository (10) if it does not correspond to the device information previously stored in the mobile station (1), where after
d) the configuration data and/or the personal settings data are downloaded automatically to the mobile station (1),
wherein the application (12) is situated in the subscriber identity module (11), SIM, and is executed by a signal from the operation system of the subscriber identity module (11), SIM, when the mobile terminal is switched on, and
wherein the application (12) for detecting device information consists of a device switch application in the subscriber identity module (11), SIM, of the mobile station (1),
wherein the network further comprises a Device Switch Detector (9) which is connected to the repository (10) and which receives the information sent from the subscriber identity module (11) that a subscriber has changed a subscriber identity module.

2. Method of claim 1, **characterized in that** when detecting equipment information, the application (12) reads the previously stored device information from a memory space in the mobile station (1) from the subscriber identity module (11), SIM, and the application (12) requests the detected device information from the terminal of the mobile station (1), the detected information being compared to the previously stored device information.

3. Method of claim 1, **characterized in that** when detecting equipment information, the detected device information is compared to the device information previously stored in the mobile station (1) by means of an indicator, which is read by the application (12) from a memory space in the mobile station (1), the value of the indicator indicating whether a switch of the subscriber identity module (11), SIM, has taken place.

4. Method of any of claims 1 - 3, **characterized in that** when the network is based on GSM or UMTS, the subscriber identity module, SIM, is an Universal Subscriber Identity Module (USIM).

5. Method of claim 2, **characterized in that** when detecting equipment information, a terminal switch is detected and the application (12) is a Terminal Switch Application (TSD) in the subscriber identity module, SIM, of the mobile station (1).

6. Method of claim 5, **characterized in that** the device information detected by said terminal switch application consists of equipment information, such as the International Mobile Equipment (IMEI) number.

7. Method of any of claims 4 - 6, **characterized in that** the repository (10) stores lists of pairs of International Mobile Equipment (IMEI) numbers and either or both of International Mobile Subscriber Identity (IMSI) numbers and Mobile Station Integrated Service Digital Network (MSISDN) numbers.

8. Method claims 6 and 7, **characterized in that** when the IMEI value detected does not correspond to the IMEI previously stored on the SIM card it is updated to the SIM card and sent to be stored in said repository storing pairs of IMEI/IMSI and or MSISDN values.

9. Method of claim 3, **characterized in that** when detecting subscriber information, a SIM switch is detected and the application (12) is a SIM Switch Application in the Subscriber Identity Module (SIM) of the mobile station (1).

10. Method of any of claims 4, 8 and 9, **characterized in that** the repository (10) stores lists of pairs of International Mobile Subscriber Identity (IMSI) numbers, Mobile Station Integrated Service Digital Network (MSISDN) numbers and Integrated Circuit Card ID (ICCID) numbers.

11. Method claims 9 and 10, **characterized in that** the device information detected by said SIM switch application is an indicator value indicating whether a SIM switch has taken place.

12. Method claim 11, **characterized in that** when according to said indicator value, a SIM switch has taken place, subscriber information, such as new IMSI/MSISDN/ICCID values, are sent to be stored in said repository storing pairs of IMSI/MSISDN/ICCID values and said indicator value is updated to tell about the SIM switch.

13. Mobile telecommunication network for detection of device information including subscriber information and equipment information, the network comprising a mobile station (1) with a terminal part and with a subscriber identity module (11), SIM, and an application (12) adapted to detect device information of the mobile terminal attaching to the network, wherein the network comprises a detector (9) adapted to handle device information of the mobile station (1) attaching to the network,
a comparator adapted to compare the detected device information to the device information previously stored in the mobile station (1), and a repository (10) adapted to store device information, including configuration data and/or personal settings data, wherein the device information is stored in the network repository (10), if it does not correspond to the device information previously stored in the mobile station (1), wherein the application (12) is situated in the subscriber identity module (11), SIM, and is executed by a signal from the operation system of the subscriber identity module (11), SIM, when the mobile terminal is switched on, and wherein the application (12) adapted to detect device information consists of a device switch application (12) in the subscriber identity module (11), SIM, of the mobile station (1) the network further comprising a Device Switch Detector (9) which is connected to the repository (10) and which is adapted to receive the information sent from the subscriber identity module (11) that a subscriber has changed a subscriber identity module.

14. Mobile telecommunication network of claim 13, **characterized in that** the network is based on GSM or UMTS, the subscriber identity module (11), SIM, being the Universal Subscriber Identity Module (USIM).

15. Mobile telecommunication network of claim 14, **characterized in that** the device switch application in the subscriber identity module, SIM, of the mobile station (1) is a Terminal Switch Application.

16. Mobile telecommunication network of claim 15, **characterized in that** the repository (10) is adapted to store lists of pairs of International Mobile Equipment (IMEI) numbers and any or both of International Mobile Subscriber Identity (IMSI) numbers and MSISDN values.

17. Mobile telecommunication network of any of claims 12 - 16, **characterized in that** the detector for handling device information is a Terminal Switch Detector (TSD).

18. Mobile telecommunication network of claim 14, **characterized in that** the device switch application in the subscriber identity module, SIM, of the mobile terminal is a SIM Switch Application.

19. Mobile telecommunication network of claim 15, **characterized in that** the repository (10) is adapted to store lists of International Mobile Subscriber Identity (IMSI) numbers, Mobile Station Integrated Service Digital Network (MSISDN) numbers and Integrated Circuit Card ID (ICCID) numbers.

20. Mobile telecommunication network of claim 18 and 19, **characterized in that** the subscriber identity module, SIM, contains a variable indicating whether the new IMSI/MSISDN/ICCID information has been stored in the repository (10).

21. Mobile telecommunication network of any of claims 18 - 20, **characterized in that** the detector for handling device information is a SIM Switch Detector (SSD).

22. Mobile station (1) for use in a mobile telecommunication network, the mobile station (1) having a terminal part and a subscriber identity module, SIM, and an application (12) running in the mobile station (12), wherein the application (12) is intended for detection of device information and has means
a) adapted to detect device information of the mobile station (1) attaching to the network,
b) adapted to compare the detected device information to the device information previously stored in the mobile station (1), and
c) adapted to send the detected device information to be stored in the network if it does not correspond to the device information previously stored in the mobile station (1), and
wherein the application (12) is situated in the subscriber identity module, SIM, and is executed by a signal from the operation system of the subscriber identity module, SIM, when the mobile terminal is switched on, and wherein the application (12) for detecting device information consists of a device switch application in the subscriber identity module (11), SIM, of the mobile station (1), and wherein the subscriber identity module is adapted to send the information that a subscriber has changed a subscriber identity module to a Device Switch Detector comprised in the network,

23. Mobile station (1) of claim 22, **characterized in that** the device switch application in the subscriber identity module, SIM, of the mobile station (1) is a Terminal Switch Application.

24. Mobile station (1) of claim 22, **characterized in that** the device switch application in the subscriber identity module, SIM, of the mobile terminal is a SIM Switch Application.

## Patentansprüche

1. Verfahren in einem mobilen Telekommunikationsnetzwerk zum Erkennen von Vorrichtungsinformationen, einschließlich Teilnehmerinformationen und Vorrichtungsinformationen, wobei das Netzwerk eine Mobilstation (1) mit einem Endgerätteil und mit einem Teilnehmeridentifikationsmodul (11), SIM und einer Anwendung (12) umfasst, wobei das Netzwerk ferner ein Repository (10) zum Speichern von Vorrichtungsinformationen, einschließlich Konfigurationsdaten und/oder persönlichen Einstellungsdaten, umfasst, wobei das Verfahren umfasst
a) Erkennen von Vorrichtungsinformationen der mit dem Netzwerk verbundenen Mobilstation (1) durch die Anwendung (12),
b) Vergleichen der erkannten Vorrichtungsinformationen durch die Anwendung (12) mit den zuvor in der Mobilstation (1) gespeicherten Vorrichtungsinformationen,
c) die in der Mobilstation (1) laufende Anwendung (12) sendet die erkannten Vorrichtungsinformationen, die im Repository des Netzwerks (10) zu speichern sind, wenn sie nicht den zuvor in der Mobilstation (1) gespeicherten Vorrichtungsinformationen entsprechen, wobei danach
d) die Konfigurationsdaten und/oder die persönlichen Einstellungsdaten automatisch auf die Mobilstation (1) heruntergeladen werden, wobei sich die Anwendung (12) im Teilnehmeridentifikationsmodul (11), SIM, befindet und durch ein Signal vom Betriebssystem des Teilnehmeridentifikationsmoduls (11), SIM, beim Einschalten des mobilen Endgeräts ausgeführt wird, und wobei die Anwendung (12) zum Erkennen von Vorrichtungsinformationen aus einer Vorrichtungswechselanwendung im Teilnehmeridentifikationsmodul (11), SIM, der Mobilstation (1) besteht,
wobei das Netzwerk ferner einen Vorrichtungswechseldetektor (9) umfasst, der mit dem Repository (10) verbunden ist und der die von dem Teilnehmeridentifikationsmodul (11) gesendete Information empfängt, dass ein Teilnehmer ein Teilnehmeridentifikationsmodul geändert hat.

2. Verfahren nach Anspruch 1, **dadurch gekennzeichnet, dass** die Anwendung (12) beim Erkennen von Vorrichtungsinformationen die zuvor gespeicherten Vorrichtungsinformationen aus einem Speicherplatz in der Mobilstation (1) vom Teilnehmeridentifikationsmodul (11), SIM, liest und die Anwendung (12) die erkannten Vorrichtungsinformationen vom Endgerät der Mobilstation (1) abruft, wobei die erkannten Informationen mit den zuvor gespeicherten Vorrichtungsinformationen verglichen werden.

3. Verfahren nach Anspruch 1, **dadurch gekennzeichnet, dass** beim Erkennen von Vorrichtungsinformationen die erkannten Vorrichtungsinformationen mit den zuvor in der Mobilstation (1) gespeicherten Vorrichtungsinformationen mittels eines Indikators verglichen werden, die von der Anwendung (12) aus einem Speicherplatz in der Mobilstation (1) gelesen wird, wobei der Wert des Indikators indiziert, ob ein Wechseln des Teilnehmeridentifikationsmoduls (11), SIM, stattgefunden hat.

4. Verfahren nach einem der Ansprüche 1-3, **dadurch gekennzeichnet, dass**, wenn das Netzwerk auf GSM oder UMTS basiert, das Teilnehmeridentifikationsmodul SIM ein Universelles Teilnehmeridentifikationsmodul (USIM) ist.

5. Verfahren nach Anspruch 2, **dadurch gekennzeichnet, dass** beim Erkennen von Vorrichtungsinformationen ein Wechseln des Endgerätes erkannt wird und die Anwendung (12) eine Endgerätewechselanwendung (TSD) im Teilnehmeridentifikationsmodul SIM der Mobilstation (1) ist.

6. Verfahren nach Anspruch 5, **dadurch gekennzeichnet, dass** die von der Endgerätewechselanwendung erkannten Vorrichtungsinformationen aus Equipmentsinformationen, wie beispielsweise die IMEI-Nummer (International Mobile Equipment), bestehen.

7. Verfahren nach einem der Ansprüche 4 - 6, **dadurch gekennzeichnet, dass** das Repository (10) Listen von Paaren von IMEI-Nummern (International Mobile Equipment) und einer oder beiden der IMSI-Nummern (International Mobile Subscriber Identity) und MSISDN-Nummern (Mobile Station Integrated Service Digital Network) speichert.

8. Verfahren mit den Ansprüchen 6 und 7, **dadurch gekennzeichnet, dass**, wenn der erkannte IMEI-Wert nicht dem zuvor auf der SIM-Karte gespeicherten IMEI entspricht, er auf die SIM-Karte aktualisiert und zur Speicherung in dem Repository gesendet wird, das Paare von IMEI/IMSI- und/oder MSISDN-Werten speichert.

9. Verfahren nach Anspruch 3, **dadurch gekennzeichnet, dass** beim Erkennen von Teilnehmerinformationen ein SIM-Wechseln erkannt wird und die Anwendung (12) eine SIM-Wechselanwendung im Teilnehmeridentifikationsmodul (SIM) der Mobilstation (1) ist.

10. Verfahren nach einem der Ansprüche 4, 8 und 9, **dadurch gekennzeichnet, dass** das Repository (10) Listen von Paaren von IMSI-Nummern (International Mobile Subscriber Identity), MSISDN-Nummern (Mobile Station Integrated Service Digital Network) und ICCID-Nummern (Integrated Circuit Card ID) speichert.

11. Verfahren mit den Ansprüchen 9 und 10, **dadurch gekennzeichnet, dass** die von der SIM Wechselanwendung erkannten Vorrichtungsinformationen ein Indikatorwert sind, der indiziert, ob ein SIM-Wechseln stattgefunden hat.

12. Verfahren Anspruch 11, **dadurch gekennzeichnet, dass**, wenn gemäß dem Indikatorwert ein SIM-Wechseln stattgefunden hat, Teilnehmerinformationen, wie beispielsweise neue IMSI/MSISDN/ICCID-Werte, gesendet werden, um in dem Repository gespeichert zu werden und Paare von IMSI/MSISDN/ICCID-Werten zu speichern, und der Indikatorwert aktualisiert wird, um über das SIM-Wechseln zu informieren.

13. Mobiles Telekommunikationsnetzwerk zum Erkennen von Vorrichtungsinformationen, einschließlich Teilnehmerinformationen und Vorrichtungsinformationen, wobei das Netzwerk eine Mobilstation (1) mit einem Endgerätteil und mit einem Teilnehmeridentifikationsmodul (11), SIM und einer Anwendung (12) umfasst, die zum Erkennen von Vorrichtungsinformationen des an das Netzwerk verbundenen mobilen Endgeräts eingerichtet ist, wobei das Netzwerk einen Detektor (9) umfasst, der eingerichtet ist, um Vorrichtungsinformationen der an das Netzwerk verbundenen Mobilstation (1) zu verarbeiten, einen Vergleicher, der eingerichtet ist, um die erkannten Vorrichtungsinformationen mit den zuvor in der Mobilstation (1) gespeicherten Vorrichtungsinformationen zu vergleichen, und ein Repository (10), das eingerichtet ist, um Vorrichtungsinformationen zu speichern, einschließlich Konfigurationsdaten und/oder persönliche Einstellungsdaten, wobei die Vorrichtungsinformationen in dem Repository (10) des Netzwerkes gespeichert sind, wenn sie nicht den zuvor in der Mobilstation (1) gespeicherten Vorrichtungsinformationen entsprechen, wobei sich die Anwendung (12) im Teilnehmeridentifikationsmodul (11), SIM, befindet und durch ein Signal des Betriebssystems des Teilnehmeridentifikationsmoduls (11), SIM, beim Einschalten des mobilen Endgeräts ausgeführt wird, und wobei die Anwendung (12), die zum Erkennen von Vorrichtungsinformationen eingerichtet ist, aus einer Vorrichtungswechselanwendung (12) im Teilnehmeridentifikationsmodul (11), SIM, der Mobilstation (1) besteht, wobei das Netzwerk ferner einen Vorrichtungswechseldetektor (9) umfasst, der mit dem Repository (10) verbunden ist und der zum Empfangen der vom Teilnehmeridentifikationsmodul (11) gesendeten Informationen eingerichtet ist, dass ein Teilnehmer ein Teilnehmeridentifikationsmodul geändert hat.

14. Mobiles Telekommunikationsnetzwerk nach Anspruch 13, **dadurch gekennzeichnet, dass** das Netzwerk auf GSM oder UMTS basiert, wobei das Teilnehmeridentifikationsmodul (11), SIM, das Universelles Teilnehmeridentifikationsmodul (USIM) ist.

15. Mobiles Telekommunikationsnetz nach Anspruch 14, **dadurch gekennzeichnet, dass** die Vorrichtungswechselanwendung im Teilnehmeridentifikationsmodul SIM der Mobilstation (1) eine Endgerätewechselanwendung ist.

16. Mobiles Telekommunikationsnetz nach Anspruch 15, **dadurch gekennzeichnet, dass** das Repository (10) eingerichtet ist, um Listen von Paaren von IMEI-Nummern (International Mobile Equipment) und einer oder beiden von IMSI-Nummern (International Mobile Subscriber Identity) und MSISDN-Werten zu speichern.

17. Mobiles Telekommunikationsnetzwerk nach einem der Ansprüche 12 -16, **dadurch gekennzeichnet, dass** der Detektor für die Handhabung von Vorrichtungsinformationen ein Endgerätewechseldetektor (TSD) ist.

18. Mobiles Telekommunikationsnetzwerk nach Anspruch 14, **dadurch gekennzeichnet, dass** die Vorrichtungswechselanwendung im Teilnehmeridentifikationsmodul SIM des mobilen Endgeräts eine SIM Wechselanwendung ist.

19. Mobiles Telekommunikationsnetz nach Anspruch 15, **dadurch gekennzeichnet, dass** das Repository (10) eingerichtet ist, um Listen von IMSI-Nummern (International Mobile Subscriber Identity), MSISDN-Nummern (Mobile Station Integrated Service Digital Network) und ICCID-Nummern (Integrated Circuit Card ID) zu speichern.

20. Mobiles Telekommunikationsnetzwerk nach Ansprüchen 18 und 19, **dadurch gekennzeichnet, dass** das Teilnehmeridentifikationsmodul SIM eine Variable enthält, die angibt, ob die neuen IMSI/ MSISDN/ ICCID-Informationen im Repository (10) gespeichert wurden.

21. Mobiles Telekommunikationsnetzwerk nach einem der Ansprüche 18 - 20, **dadurch gekennzeichnet, dass** der Detektor für die Handhabung von Vorrichtungsinformationen ein SIM-Wechseldetektor (SSD) ist.

22. Mobilstation (1) zur Verwendung in einem mobilen Telekommunikationsnetzwerk, wobei die Mobilstation (1) einen Endgeräteteil und ein Teilnehmeridentifikationsmodul, SIM und eine in der Mobilstation (12) laufende Anwendung (12) aufweist, wobei die Anwendung (12) zum Erkennen von Vorrichtungsinformationen bestimmt ist und Mittel aufweist,
a) eingerichtet, um Vorrichtungsinformationen der Mobilstation (1) zu erkennen, die mit dem Netzwerk verbunden ist,
b) eingerichtet, um die erkannten Vorrichtungsinformationen mit den zuvor in der Mobilstation (1) gespeicherten Vorrichtungsinformationen zu vergleichen, und
c) eingerichtet, um die erkannten Vorrichtungsinformationen zu senden, die im Netzwerk zu speichern sind, wenn sie nicht den zuvor in der Mobilstation (1) gespeicherten Vorrichtungsinformationen entsprechen, und
wobei sich die Anwendung (12) im Teilnehmeridentifikationsmodul SIM befindet und durch ein Signal vom Betriebssystem des Teilnehmeridentifikationsmoduls SIM ausgeführt wird, wenn das mobile Endgerät eingeschaltet wird, und wobei die Anwendung (12) zum Erkennen von Vorrichtungsinformationen aus einer Vorrichtungswechselanwendung im Teilnehmeridentifikationsmodul (11) SIM der Mobilstation (1) besteht, und wobei das Teilnehmeridentifikationsmodul eingerichtet ist, um die Information zu senden, dass ein Teilnehmer ein Teilnehmeridentifikationsmodul zu einem im Netzwerk enthaltenen Vorrichtungswechseldetektor geändert hat.

23. Mobilstation (1) nach Anspruch 22, **dadurch gekennzeichnet, dass** die Vorrichtungswechselanwendung im Teilnehmeridentifikationsmodul SIM der Mobilstation (1) eine Endgerätewechselanwendung ist.

24. Mobilstation (1) nach Anspruch 22, **dadurch gekennzeichnet, dass** die Vorrichtungswechselanwendung im Teilnehmeridentifikationsmodul SIM des mobilen Endgeräts eine SIM-Wechselanwendung ist.

## Revendications

1. Procédé dans un réseau de télécommunication mobile pour la détection d'informations de dispositif qui incluent une information d'abonné et une information d'équipement, le réseau comprenant une station mobile (1) qui comporte une partie de terminal et un module d'identité d'abonné (11), SIM, et une application (12), le réseau comprenant en outre un registre référentiel de stockage (10) pour stocker les informations de dispositif, incluant des données de configuration et/ou des données de réglages personnels, le procédé comprenant :
a) la détection par l'application (12) des informations de dispositif de la station mobile (1) qui est liée au réseau ;
b) la comparaison par l'application (12) des informations de dispositif détectées avec les informations de dispositif qui ont été stockées au préalable dans la station mobile (1) ;
c) l'application (12) qui est exécutée dans la station mobile (1) envoie les informations de dispositif détectées qui doivent être stockées dans le registre référentiel de stockage de réseau (10) si elles ne correspondent pas aux informations de dispositif qui ont été stockées au préalable dans la station mobile (1), dans lequel ensuite
d) les données de configuration et/ou les données de réglages personnels sont téléchargées automatiquement sur la station mobile (1) ; dans lequel :
l'application (12) est située dans le module d'identité d'abonné (11), SIM, et elle est exécutée au moyen d'un signal en provenance du système d'exploitation du module d'identité d'abonné (11), SIM, lorsque le terminal mobile est dans l'état de marche ; et dans lequel :
l'application (12) pour détecter les informations de dispositif est constituée par une application de commutation de dispositif dans le module d'identité d'abonné (11), SIM, de la station mobile (1) ; dans lequel :
le réseau comprend en outre un détecteur de commutation de dispositif (9) qui est connecté au registre référentiel de stockage (10) et qui reçoit l'information qui est envoyée depuis le module d'identité d'abonné (11) et qui consiste en ce qu'un abonné a changé un module d'identité d'abonné.

2. Procédé selon la revendication 1, **caractérisé en ce que**, lors de la détection d'une information d'équipement, l'application (12) lit les informations de dispositif qui ont été stockées au préalable à partir d'un espace de mémoire dans la station mobile (1) depuis le module d'identité d'abonné (11), SIM, et l'application (12) demande en requête les informations de dispositif détectées au terminal de la station mobile (1), les informations de dispositif détectées étant comparées avec les informations de dispositif qui ont été stockées au préalable.

3. Procédé selon la revendication 1, **caractérisé en ce que**, lors de la détection d'une information d'équipement, les informations de dispositif détectées sont comparées avec les informations de dispositif qui ont été stockées au préalable dans la station mobile (1) au moyen d'un indicateur, lequel est lu par l'application (12) à partir d'un espace de mémoire dans la station mobile (1), la valeur de l'indicateur indiquant si oui ou non une commutation du module d'identité d'abonné (11), SIM, a été réalisée.

4. Procédé selon l'une quelconque des revendications 1 à 3, **caractérisé en ce que**, lorsque le réseau est basé sur GSM ou UMTS, le module d'identité d'abonné, SIM, est un module universel d'identité d'abonné (USIM).

5. Procédé selon la revendication 2, **caractérisé en ce que**, lors de la détection d'une information d'équipement, une commutation de terminal est détectée et l'application (12) est une application de commutation de terminal (TSD) dans le module d'identité d'abonné, SIM, de la station mobile (1).

6. Procédé selon la revendication 5, **caractérisé en ce que** les informations de dispositif qui sont détectées par ladite application de commutation de terminal sont constituées par une information d'équipement, telle que le numéro international d'équipement mobile (IMEI).

7. Procédé selon l'une quelconque des revendications 4 à 6, **caractérisé en ce que** le registre référentiel de stockage (10) stocke des listes de paires constituées par des numéros internationaux d'équipement mobile (IMEI) et soit par des numéros d'identité internationale d'abonné de mobile (IMSI), soit par des numéros de réseau numérique à intégration de services de station mobile (MSISDN), soit par ces deux types de numéros.

8. Procédé selon les revendications 6 et 7, **caractérisé en ce que**, lorsque la valeur d'IMEI qui est détectée ne correspond pas à la valeur d'IMEI qui a été stockée au préalable sur la carte SIM, elle est mise à jour sur la carte SIM et elle est envoyée dans le but de son stockage dans ledit registre référentiel de stockage qui stocke des paires de valeurs IMEI/IMSI et/ou MSISDN.

9. Procédé selon la revendication 3, **caractérisé en ce que**, lors de la détection d'une information d'abonné, une commutation de SIM est détectée et l'application (12) est une application de commutation de SIM dans le module d'identité d'abonné (SIM) de la station mobile (1).

10. Procédé selon l'une quelconque des revendications 4, 8 et 9, **caractérisé en ce que** le registre référentiel de stockage (10) stocke des listes de paires constituées par des numéros d'identité internationale d'abonné de mobile (IMSI), par des numéros de réseau numérique à intégration de services de station mobile (MSISDN) et par des numéros d'ID de carte de circuit intégré (ICCID).

11. Procédé selon les revendications 9 et 10, **caractérisé en ce que** les informations de dispositif qui sont détectées par ladite application de commutation de SIM sont une valeur d'indicateur qui indique si oui ou non une commutation de SIM a été réalisée.

12. Procédé selon la revendication 11, **caractérisé en ce que**, lorsque, conformément à ladite valeur d'indicateur, une commutation de SIM a été réalisée, une information d'abonné, telle que de nouvelles valeurs de IMSI/MSISDN/ICCID, est envoyée dans le but de son stockage dans ledit registre référentiel de stockage qui stocke des paires de valeurs IMSI/MSISDN/ICCID, et ladite valeur d'indicateur est mise à jour dans le but de la diffusion d'une information concernant la commutation de SIM.

13. Réseau de télécommunication mobile pour la détection d'informations de dispositif qui incluent une information d'abonné et une information d'équipement, le réseau comprenant une station mobile (1) qui comporte une partie de terminal et un module d'identité d'abonné (11), SIM, et une application (12) qui est adaptée de manière à ce qu'elle détecte les informations de dispositif du terminal mobile qui est lié au réseau, dans lequel le réseau comprend :
un détecteur (9) qui est adapté de manière à ce qu'il gère les informations de dispositif de la station mobile (1) qui est liée au réseau ;
un comparateur qui est adapté de manière à ce qu'il compare les informations de dispositif détectées avec les informations de dispositif qui ont été stockées au préalable dans la station mobile (1) ; et
un registre référentiel de stockage (10) qui est adapté de manière à ce qu'il stocke les informations de dispositif, incluant des données de configuration et/ou des données de réglages personnels, dans lequel les informations de dispositif sont stockées dans le registre référentiel de stockage de réseau (10), si elles ne correspondent pas aux informations de dispositif qui ont été stockées au préalable dans la station mobile (1), dans lequel l'application (12) est située dans le module d'identité d'abonné (11), SIM, et elle est exécutée au moyen d'un signal en provenance du système d'exploitation du module d'identité d'abonné (11), SIM, lorsque le terminal mobile est dans l'état de marche, et dans lequel l'application (12) est adaptée de manière à ce qu'elle détecte des informations de dispositif qui sont constituées par une application de commutation de dispositif (12) dans le module d'identité d'abonné (11), SIM, de la station mobile (1), le réseau comprenant en outre un détecteur de commutation de dispositif (9) qui est connecté au registre référentiel de stockage (10) et qui est adapté de manière à ce qu'il reçoive l'information qui est envoyée depuis le module d'identité d'abonné (11) et qui consiste en ce qu'un abonné a changé un module d'identité d'abonné.

14. Réseau de télécommunication mobile selon la revendication 13, **caractérisé en ce que** le réseau est basé sur GSM ou UMTS, le module d'identité d'abonné (11), SIM, étant le module universel d'identité d'abonné (USIM).

15. Réseau de télécommunication mobile selon la revendication 14, **caractérisé en ce que** l'application de commutation de dispositif dans le module d'identité d'abonné, SIM, de la station mobile (1), est une application de commutation de terminal.

16. Réseau de télécommunication mobile selon la revendication 15, **caractérisé en ce que** le registre référentiel de stockage (10) est adapté de manière à ce qu'il stocke des listes de paires constituées par des numéros internationaux d'équipement mobile (IMEI) et soit par des numéros d'identité internationale d'abonné de mobile (IMSI), soit par des valeurs MSISDN, soit par ces deux types de numéros.

17. Réseau de télécommunication mobile selon l'une quelconque des revendications 12 à 16, **caractérisé en ce que** le détecteur pour gérer les informations de dispositif est un détecteur de commutation de terminal (TSD).

18. Réseau de télécommunication mobile selon la revendication 14, **caractérisé en ce que** l'application de commutation de dispositif dans le module d'identité d'abonné, SIM, du terminal mobile est une application de commutation de SIM.

19. Réseau de télécommunication mobile selon la revendication 15, **caractérisé en ce que** le registre référentiel de stockage (10) est adapté de manière à ce qu'il stocke des listes de numéros d'identité internationale d'abonné de mobile (IMSI), de numéros de réseau numérique à intégration de services de station mobile (MSISDN) et de numéros d'ID de carte de circuit intégré (ICCID).

20. Réseau de télécommunication mobile selon les revendications 18 et 19, **caractérisé en ce que** le module d'identité d'abonné, SIM, contient une variable qui indique si oui ou non la nouvelle information IMSI/MSISDN/ICCID a été stockée dans le registre référentiel de stockage (10).

21. Réseau de télécommunication mobile selon l'une quelconque des revendications 18 à 20, **caractérisé en ce que** le détecteur pour gérer les informations de dispositif est un détecteur de commutation de SIM (SSD).

22. Station mobile (1) destinée à être utilisée dans un réseau de télécommunication mobile, la station mobile (1) comportant une partie de terminal et un module d'identité d'abonné, SIM, et une application (12) qui est exécutée dans la station mobile (1), dans laquelle l'application (12) est destinée à détecter des informations de dispositif et comporte des moyens :
a) adaptés pour détecter les informations de dispositif de la station mobile (1) qui est liée au réseau ;
b) adaptés pour comparer les informations de dispositif détectées avec les informations de dispositif qui ont été stockées au préalable dans la station mobile (1) ; et
c) adaptés pour envoyer les informations de dispositif détectées qui sont destinées à être stockées dans le réseau si elles ne correspondent pas aux informations de dispositif qui ont été stockées au préalable dans la station mobile (1) ; et dans laquelle :
l'application (12) est située dans le module d'identité d'abonné, SIM, et elle est exécutée au moyen d'un signal en provenance du système d'exploitation du module d'identité d'abonné, SIM, lorsque le terminal mobile est dans l'état de marche, et dans laquelle l'application (12) pour détecter les informations de dispositif est constituée par une application de commutation de dispositif dans le module d'identité d'abonné (11), SIM, de la station mobile (1), et dans laquelle le module d'identité d'abonné est adapté de manière à ce qu'il envoie l'information consistant en ce qu'un abonné a changé un module d'identité d'abonné à un détecteur de commutation de dispositif qui est compris dans le réseau.

23. Station mobile (1) selon la revendication 22, **caractérisée en ce que** l'application de commutation de dispositif dans le module d'identité d'abonné, SIM, de la station mobile (1) est une application de commutation de terminal.

24. Station mobile (1) selon la revendication 22, **caractérisée en ce que** l'application de commutation de dispositif dans le module d'identité d'abonné, SIM, du terminal mobile est une application de commutation de SIM.
